# EUROPÄISCHE PATENTSCHRIFT

(11) **EP 3 512 754 B1**
(45) Veröffentlichungstag und Bekanntmachung des Hinweises auf die Patenterteilung: **06.07.2022**
(21) Anmeldenummer: 17758826.6
(22) Anmeldetag: 11.08.2017
(51) Int. Cl.: B62D 5/00, B60K 28/06, B62D 15/02

(54) **VORRICHTUNG, BETRIEBSVERFAHREN UND ELEKTRONISCHE STEUEREINHEIT ZUR STEUERUNG EINES ZUMINDEST TEILWEISE AUTOMATISIERT FAHRBAREN FAHRZEUGS**
DEVICE, OPERATING METHOD, AND ELECTRONIC CONTROL UNIT FOR CONTROLLING A VEHICLE WHICH CAN BE DRIVEN IN AN AT LEAST PARTLY AUTOMATED MANNER
DISPOSITIF, PROCÉDÉ DE FONCTIONNEMENT ET UNITÉ DE COMMANDE ÉLECTRONIQUE SERVANT À LA COMMANDE D'UN VÉHICULE POUVANT CIRCULER DE MANIÈRE AU MOINS PARTIELLEMENT AUTOMATISÉE

(30) Priorität: 16.09.2016 DE 102016217772
(43) Veröffentlichungstag der Anmeldung: 24.07.2019
(73) Patentinhaber: Bayerische Motoren Werke Aktiengesellschaft, 80809 München (DE)
(72) Erfinder: AUGST, Alexander, 80937 München (DE)
(86) Internationale Anmeldenummer: PCT/EP2017/070490
(87) Internationale Veröffentlichungsnummer: WO 2018/050377

(56) Entgegenhaltungen:
- EP-A2- 2 460 712
- DE-A1-102004 057 262
- DE-A1-102013 010 630
- DE-A1-102014 107 194
- US-A1- 2016 200 348

## Beschreibung

Die Erfindung betrifft eine Vorrichtung, ein Betriebsverfahren und ein korrespondierendes Computerprodukt (als elektronische Steuereinheit) zur Steuerung eines zumindest teilweise automatisiert fahrbaren Fahrzeugs nach Anspruch 1. Bevorzugt betrifft die Erfindung eine Lenkhandhabe-Vorrichtung eines hinsichtlich seiner Querführung zumindest teilweise automatisiert betreibbaren (fahrenden) Kraftfahrzeugs, wobei durch eine Verlagerung einer Lenkhandhabe von einem Fahrer des Fahrzeugs ein Lenkwinkel an zumindest einem lenkbaren Fahrzeug-Rade steuerbar, insbesondere vorgebbar ist und wobei die Lenkhandhabe in einem automatisierten Fahrzustand von einem den Rad-Lenkwinkel stellenden Radwinkelsteller entkoppelbar ist, hingegen in einem vom Fahrer des Fahrzeugs gesteuerten Fahrzustand in beliebiger Weise, so beispielsweise mechanisch oder elektronisch oder elektromagnetisch, an den Radwinkelsteller gekoppelt ist, und wobei die Lenkhandhabe-Vorrichtung ausgebildet ist, eine Umschaltung zwischen einem zumindest teilweise gekoppelten und einem zumindest teilweise entkoppelten Zustand vorzunehmen.

Vorliegend beansprucht wird weiterhin ein Betriebsverfahren für eine erfindungsgemäße Vorrichtung mit zumindest einem der vorliegend beschriebenen verfahrenstechnischen Merkmale sowie eine elektronische Steuereinheit, welche von einem Fahrzeug getrennt sein kann und bspw. in einem mobilen Anwendergerät implementiert sein kann und welche ausgelegt ist, eine erfindungsgemäße Vorrichtung oder Lenkhandhabe-Vorrichtung eines Fahrzeugs in der vorliegend beschriebenen Weise zu betreiben. Zum Stand der Technik wird beispielshalber auf die DE 10 2014 216 140 A1 verwiesen. Ferner wird zum Stand der Technik auf die DE 10 2004 057 262 A1, die die Merkmale des Oberbegriffs des Anspruchs 1 offenbart, und die US 2016 0 200 348 A1 verwiesen.

Das automatisierte bzw. autonome Fahren von Kraftfahrzeugen im Straßenverkehr gewinnt in sämtlichen bekannten Stufen, wozu nach der einfachen Fahrerassistenz die Teilautomatisierung und die Hochautomatisierung bis hin zur Vollautomatisierung zählt, zunehmend an Bedeutung. In den vorstehend genannten Automatisierungsstufen ist dabei jeweils noch eine Lenkhandhabe (üblicherweise ein Lenkrad) vorhanden, mit der bzw. dem ein Mensch, nämlich der Fahrer des Kraftfahrzeugs den sog. querdynamischen Kurs des Fahrzeugs beeinflussen oder bestimmen kann, d.h. mittels einer Lenkhandhabe wird eine Gierbewegung oder allgemein eine Lenkung, d.h. eine von einer Geradeausfahrt abweichende Bewegung des Kraftfahrzeugs bestimmt. In noch allgemeinerer Form wird eine solche Lenkhandhabe vorliegend als Bedienelement (zumindest zur Steuerung der Querführung des Fahrzeugs) bezeichnet.

In der eingangs genannten ersten Schrift ist ein Lenkrad (als Lenkhandhabe oder Bedienelement) bzw. ein Lenksystem eines Kraftfahrzeugs beschrieben, bei dem das Lenkrad mechanisch an einen Radwinkelsteller, der letztlich den an zumindest einem lenkbaren Rad des Fahrzeugs eingestellten Lenkwinkel oder Spurwinkel bestimmt, koppelbar oder von diesem entkoppelbar ist. Ausdrücklich darauf hingewiesen sei an dieser Stelle, dass vorliegend abweichend von diesem genannten Stand der Technik auch eine sog. elektronische Koppelung zwischen der Lenkhandhabe und dem Radwinkelsteller vorgesehen sein kann, d.h. die vorliegende Erfindung betrifft neben mechanischen Lenksystemen mit einer mechanischen Verbindung zwischen der Lenkhandhabe und dem Radwinkelsteller auch die grundsätzlich bekannten steer-by-wire-Systeme, bei denen der Fahrer mit seiner Lenkhandhabe einen sensorisch erkennbaren Lenkwunsch vorgibt, welcher dann elektronisch übermittelt von einem geeignet ansteuerbaren Aktuator an dem zumindest einen lenkbaren Fahrzeug-Rad geeignet umgesetzt wird.

Kurz auf die eingangs genannte erste Schrift zurückkommend kann dort der Fahrer seine Lenkhandhabe im wesentlichen axial verschieben, d.h. entweder von sich weg (nach vorne hin) verschieben, wodurch die Lenkhandhabe vom Radwinkelsteller entkoppelt wird, oder um ein geringes Maß zu sich hin ziehen, wodurch die Lenkhandhabe letztlich (d.h. indirekt) an den Radwinkelsteller gekoppelt wird. Neben diesem bekannten Stand der Technik seien als weiterer bekannter Stand der Technik noch die nahezu bereits üblichen Fahrerassistenzsystemen genannt, mittels derer das Lenkrad abhängig von einer Umwelterfassung und einer Situationsauswertung um das Fahrzeug herum mit einer relativ schwachen jederzeit vom Fahrer überstimmbaren Kraft automatisiert verdreht und/oder ggf. zum Vibrieren gebracht wird. Weiterhin bekannt ist ein sog. "Hands-On-Sensor" am Lenkrad (bzw. allgemein am Bedienelement), welcher detektieren kann, ob sich zumindest eine Hand Fahrers am Lenkrad befindet. Ein solches "Hands-on-System" gibt eine Warnung, z.B. eine sogenannte "Übernahmeaufforderung" aus, falls der Fahrer bei teilautomatisch durchgeführten FahrManövern das Lenkrad für eine gewisse Zeitspanne loslässt. Eine solche Übernahmeaufforderung fordert den Fahrer auf, zumindest die Lenkung des Fahrzeugs zu übernehmen.

Wenngleich diese bekannten Systeme bereits eine relativ hohe Güte und Verlässlichkeit aufweisen, so soll der Fahrer des Fahrzeugs doch jederzeit sicher (und unmissverständlich) entscheiden können, ob er ein bestimmtes Fahrmanöver, welches sein Fahrzeug selbsttätig ausführt, akzeptiert oder ob er dieses verhindern bzw. korrigieren möchte. Dieses Zusammenwirken zwischen dem Willen des Fahrers einerseits und dem Handeln eines die Fahrzeug-Querführung übernehmenden automatischen elektronisch gesteuerten Systems anderseits erfolgt im derzeitigen Stand der Technik über diejenige Kraft, mit welcher die Lenkhandhabe bzw. das Bedienelement vom Fahrer betätigt wird. Daher wird die Kraft (bzw. genauer das Moment), mit der bzw. dem das Lenkrad bei automatisierten Fahrmanövern automatisch gedreht wird, hinreichend klein gewählt, damit auch ein körperlich schmächtiger oder unsicherer Fahrer nicht verunsichert wird und diese automatische Vorgabe jederzeit überwinden kann. Andererseits müssen die von einem (eine elektronische Ansteuerung bspw. elektromechanisch umsetzenden) System beim zumindest teilweise automatisierten Fahren am Lenkrad gestellten Kräfte bzw. Momente ausreichend stark gewählt werden, so dass der Fahrer das Lenkrad nicht mit einer unbeabsichtigten Bewegung, so bspw. mit einem Anstoßen seines abgewinkelten Beines am Lenkrad, verdreht oder dessen Bewegung bei einem automatischen Lenkvorgang versehentlich oder instinktiv behindert. Zwar kann beim eingangs genannten Stand der Technik dieses letztgenannte Problem nicht auftreten, jedoch kann bei diesem Stand der Technik zwischen dem Wunsch des Fahrers, die Lenkung selbst zu übernehmen, und der tatsächlichen Realisierung dieses Wunsches nach axialer Verlagerung des Lenkrad zu ihm hin eine gewisse, möglicherweise unverhältnismäßig lange Zeit vergehen.

Eine Abhilfemaßnahme für diese geschilderte Problematik aufzuzeigen, ist Aufgabe der vorliegenden Erfindung.

Die Lösung dieser Aufgabe ist mit einer Vorrichtung nach Anspruch 1 erreicht.

Auf die weiter oben genannte Lenkhandhabe-Vorrichtung Bezug nehmend kann zur Lösung der vorstehend genannten Aufgabe die Ausprägung eines haptischen Kontakts zwischen dem Fahrer und der Lenkhandhabe auch ohne eine Verlagerung derselben als die besagte bestimmte Handlung des Fahrers den Grad der Koppelung zwischen der Lenkhandhabe und dem Radwinkelsteller und/oder zwischen der Lenkhandhabe und dem Fahrzeugaufbau (als einer festen Position im Koordinatensystem des Fahrzeugs) bestimmen. Unter dem Grad der Kopplung kann dabei stets neben einem vollständig gekoppelten Zustand und einem vollständig entkoppelten Zustand zumindest ein sog. "Zwischenzustand" vorliegen, worauf an späterer Stelle noch näher eingegangen wird. Bereits jetzt sei gesagt, dass ein solcher Zwischenzustand von irgendwelchen, bspw. auch vorausbestimmten Randbedingungen abhängig sein kann, derart, dass bspw. für ein Lenkrad innerhalb einer gewissen Verdreh-Winkelgrenze oder eines gewissen Verdreh-Winkelbereiches desselben eine Koppelung zwischen dem Lenkrad und dem Radwinkelsteller vorliegen kann, während außerhalb dieser gewissen Verdreh-Winkelgrenze oder dieses Verdreh-Winkelbereiches keine entsprechende Kopplung vorliegt. (Solche Verdreh-Winkelgrenzen können im übrigen auch für die am lenkbaren Rad eingestellten Radlenkwinkel bestehen) Vergleichbares kann für an der Lenkhandhabe oder am Bedienelement anliegende Kräfte oder Momente gelten, bspw. derart, dass bei geringen von einer Person (insbesondere vom Fahrer des Fahrzeugs) aufgebrachten Kräften oder Momenten keine Kopplung vorliegt, während bei höheren Kräften oder Momenten automatisch eine Kopplung zwischen dem Lenkrad (bzw. allgemein dem Bedienelement) und dem Radwinkelsteller hergestellt wird.

Ferner sei nochmals ausdrücklich darauf hingewiesen, dass eine besagte Kopplung auf verschiedenste Weise dargestellt sein kann, so insbesondere mechanisch und/oder elektronisch und/oder elektromagnetisch. Ferner sei darauf hingewiesen, dass als Lenkhandhabe im Sinne der vorliegenden Erfindung nicht notwendigerweise ein vollständiges Bedienelement verstanden wird, so wie es für den Fahrer des Fahrzeugs sichtbar ist, sondern ggf. auch nur ein Teil eines für den Fahrer im ersten Eindruck als eine Einheit erscheinenden Bedienelements sein kann, welches Teil er handhabt, wenn er dieses Bedienelement bedient. Zurückkommend auf das heute gängigste Beispiel für ein Bedienelement zur Querführung eines Fahrzeugs, nämlich ein Lenkrad, ist eine Lenkhandhabe im Sinne der vorliegenden Beschreibung entweder nur der Lenkradkranz, welchen der Fahrer ergreift, oder auch nur ein Teil des Lenkradkranzes, welcher üblicherweise von Fahrzeug-Fahrern ergriffen wird. Hingegen stellen bspw. die Speiche oder der zentrale Nabenabschnitt eines Lenkrads keine Lenkhandhabe dar bzw. müssen nicht zwangsweise Teil der Lenkhandhabe sein. Vielmehr kann eine genannte mechanische Koppelung bspw. zwischen dem Lenkradkranz und den Speichen eines heute ansonsten üblichen Lenkrads erfolgen bzw. eine entsprechende Kopplungs- und Entkopplungsmöglichkeit vorgesehen sein. Im weiteren wird auch noch von einem ersten und einem zweiten oder weiteren Teil eines Bedienelements zur Steuerung zumindest der Querführung des Fahrzeugs gesprochen, wobei bezogen auf ein Lenkrad das genannte erste Teil abermals der Lenkradkanz sein kann, während ein zweites Teil des Bedienelements beispielsweise die Lenkrad-Speichen oder die Lenkrad-Nabe sein können.

Eine erfindungsgemäße Lenkhandhabe-Vorrichtung, die bspw. ein Lenkrad, alternativ aber auch eine Lenkstange oder einen Hebel nach Art eines joysticks oder dgl. als Lenkhandhabe (bzw. als erfindungsgemäßes Bedienelement) aufweisen kann, birgt praktisch kein Risiko einer versehentlichen Bedienung (bspw. aufgrund einer Unaufmerksamkeit des Fahrers in einem hochautomatisierten Fahrzustand), da eine sichere und schnelle Unterscheidung zwischen einem manuellen, d.h. fahrergesteuerten Fahrmodus und einem automatischen Modus (mit Steuerung der Fahrzeug-Querführung durch eine elektronische Steuereinheit) intelligent gehandhabt wird. In einer erfindungsgemäßen Vorrichtung der Erfindung muss der Unterschied zwischen dem Willen des Fahrers und dem "Willen" einer automatisiert ausführbaren Querführung daher nicht über die Größe des Lenkmoments oder angelegter Kräfte (wie im derzeitigen Stand der Technik üblich), entschieden werden. Vielmehr kann ein intelligentes Zusammenwirken zwischen dem Fahrer und einem System für ein zumindest teilweise automatisiertes Fahrern zumindest teilweise über die Art bzw. Ausprägung oder ein Maß des haptischen Kontakts zwischen dem Fahrer und der Lenkhandhabe bzw. zumindest einem ersten Teil des Bedienelements zur Fahrzeug-Querführung erfolgen.

Beispielsweise kann ein Sensor an der Lenkhandhabe (bzw. am zumindest ersten Teil des Bedienelements), so bspw. ein grundsätzlich bekannter Hands-On-Sensor, erkennen, dass der Fahrer keine seiner Hände an die Lenkhandhabe angelegt hat und damit diese nicht nach vorbestimmten Kriterien, so bspw. nicht ausreichend flächig oder nicht ausreichend fest umfasst. Als Folge einer solchen Feststellung, dass kein ausreichend bzw. geeignet ausgeprägter haptischer Kontakt vorliegt und/oder bereits dass sich das Maß des haptischen Kontakts nennenswert verringert, veranlasst die erfindungsgemäße Vorrichtung, dass sich die Kopplung zwischen der Lenkhandhabe und letztlich dem Radwinkelsteller zumindest verringert bzw. zumindest teilweise öffnet, wenn nicht sogar (im Sinne einer Entkopplung) auflöst. Vorzugsweise damit einhergehend wird dann auf einen automatisierten Fahrmodus umgeschaltet, in welchem der Radwinkelsteller von einer elektronischen Steuereinheit geeignet angesteuert wird. Vorzugsweise werden für eine solche Feststellung bezüglich des Maßes des haptischen Kontakts mehrere und vorrangig prinzipiell unterschiedliche Ausmaße des haptischen Kontakts ermittelt und berücksichtigt, so bspw. ob die Lenkhandhabe mit nur einer Hand ergriffen ist, was in einer elektronischen Steuereinheit einer erfindungsgemäßen Lenkhandhabe-Vorrichtung bspw. als nicht ausreichende Ausprägung für eine Übernahme der Fahrzeugführung durch den Fahrer gewertet werden kann, oder mit zwei Händen des Fahrers ergriffen ist, was bspw. als ausreichende Ausprägung für eine Übernahme der Fahrzeugführung durch den Fahrer gewertet werden kann. Auch kann dahingehend unterschieden werden, ob die Lenkhandhabe bspw. umgriffen wird oder mit einer vorbestimmten Mindestkraft (insbesondere Druckkraft je Flächeneinheit) beaufschlagt wird (=ausreichende Ausprägung für eine Übernahme der Fahrzeugführung durch den Fahrer), oder ob lediglich irgendetwas, so bspw. auch ein Bein des Fahrers, in einfachem anliegenden Kontakt mit der Lenkhandhabe steht. Letzteres ist ein Beispiel für eine nicht ausreichende Ausprägung des haptischen Kontakts im Hinblick auf eine Übernahme der Fahrzeugführung durch den Fahrer bzw. auf einen Übernahmewunsch des Fahrers, welchem dann folglich nicht gefolgt wird. Die jeweilige Ausprägung des haptischen Kontakts kann aber auch darin bestehen, an welchen Stellen der Lenkhandhabe der Kontakt besteht und insbesondere auch davon abhängig sein, mit welcher Kraft oder Stärke der haptische Kontakt vorliegt. Letzteres weiter ausbildend kann die Druckverteilung auf der Lenkhandhabe bzw. ein Druckverteilungsmuster auf der Lenkhandhabe ein bevorzugtes Maß für die Ausprägung des haptischen Kontakts sein, wobei als Lenkhandhabe insbesondere derjenige Bereich eines allgemeinen Steuermittels (für die Querführung des Fahrzeugs durch den Fahrer) verstanden wird, welchen der Fahrer zum Steuern regelmäßig ergreift. Im Falle eines Lenkrads ist dies somit eigentlich nur der Lenkradkranz, d.h. genau genommen stellt im Falle eines Lenkrades dessen Kranz die Lenkhandhabe bzw. ein genanntes zumindest erstes Teil des Bedienelements zur Querführung dar.

Ermittelt wird also die Ausprägung des haptischen Kontakts zwischen dem Fahrer und der Lenkhandhabe unter Nutzung einer geeigneten Sensorik und Auswertung von deren Signalen in einer elektronischen Steuereinheit, welche daraufhin abhängig von der ermittelten Ausprägung (des haptischen Kontakts) geeignet reagiert, d.h. insbesondere den Grad der Koppelung zwischen der Lenkhandhabe und dem Radwinkelsteller und/oder zwischen der Lenkhandhabe (bzw. dem ersten Teil des Querführungs-Bedienelements) und dem Fahrzeug-Aufbau (bzw. des Fahrgestells oder zu einem fahrzeugfesten Koordinatensystem unbeweglichen Teilen des Fahrzeugs) anhand geeigneter Vorgaben geeignet bzw. wie hinterlegt einstellt. Ferner kann diese soeben genannte Steuereinheit auch eine andere für die zumindest teilweise automatisierte Querführung des Fahrzeugs verantwortliche elektronische Steuereinheit veranlassen, geeignet zu handeln, d.h. die Querführung vollständig zu übernehmen oder nur Empfehlungen an den Fahrer zu geben oder die Querführung des Fahrzeugs im Wesentlichen vollumfänglich dem Fahrer zu überlassen. Eine elektronische Steuereinheit, welche in Verbindung mit einer erfindungsgemäßen Lenkhandhabe-Vorrichtung die beschriebenen Aktionen veranlasst und keineswegs fest mit dem Fahrzeug verbunden sein muss, ist somit ebenso Inhalt der vorliegenden Erfindung wie ein Computerprogramm bzw. Computerprogrammprodukt, welches auf einer solchen elektronischen Steuereinheit, welche ihrerseits bspw. in einem mobilen Anwendergerät (wie bspw. einem Smartphone oder dgl.) integriert sein kann, lauffähig ist.

In diesem Zusammenhang sei nochmals auf einen möglichen Aufbau einer erfindungsgemäßen Lenkhandhabe eingegangen. Vorzugsweise kann ein weiter außen liegender bzw. für den Fahrer einfacher zugänglicher Bestandteil eines Lenkrads bzw. allgemein einer Lenkhandhabe von einem anderen Teil der Lenkrads oder der Lenkhandhabe entkoppelt werden. Bspw. für ein Lenkrad kann also - wie bereits weiter oben erwähnt - der Lenkrad-Kranz vom zentralen sog. Lenkradtopf trennbar, insbesondere in mehreren Stufen, entkoppelbar oder abkoppelbar sein. Es kann aber auch nur ein Teil des Lenkradkranzes, so bspw. in einem Querschnitt desselben betrachtet ein Segment davon, von einem Radwinkelsteller (in allgemeinster Form) abkoppelbar sein.

Eine entkoppelte Lenkhandhabe oder ein entkoppeltes Teil derselben bzw. des Bedienelements zur Fahrzeug-Querführung wird dann bei Bedarf nach den in der vorliegenden Beschreibung genannten Kriterien wieder in zumindest einem gewissen Grad oder vollständig an den Radwinkelsteller gekoppelt, nämlich dann, wenn eine vorgegebene Ausprägung eines haptischen Kontakts zwischen dem Fahrer (und insbesondere einer Hand des Fahrers) und der Lenkhandhabe (bzw. dem Bedienelement bzw. dem besagten Bedienelement-Teil) bzw. einen nennenswerte Erhöhung und/oder Zunahme des haptischen Kontakts festgestellt wird. Beispielswiese kann eine solche Ausprägung darin bestehen, dass der Fahrer die Lenkhandhabe mit zumindest einer Hand (zunehmend fester) umgreift und/oder zusammendrückt und/oder eine bestimmte Torsionskraft auf das Lenkrad oder dgl. aufbringt. Sobald eine solche vorgegebene Ausprägung eines haptischen Kontakts vorliegt, wird die Lenkhandhabe bzw. deren zuvor abgekoppelter Teil entweder mechanisch und/oder elektronisch und/oder bspw. elektromagnetisch letztlich, d.h. ggf. unter Zwischenschaltung weiterer Elemente, mit dem genannten Radwinkelsteller bis zu einem gewissen Grad (der Kopplung - worauf an späterer Stelle noch näher eingegangen wird) oder vollständig verbunden.

Demgemäß weist eine bevorzugte Ausführungsform der vorliegenden Erfindung eine Koppelungseinrichtung irgendwo zwischen der Lenkhandhabe und dem Radwinkelsteller angesiedelt auf, welche ausgebildet ist, ausgehend von einem entkoppelten Zustand einen zumindest teilweise gekoppelten Zustand herzustellen, wenn eine bestimmte Ausprägung des haptischen Kontakts festgestellt wird, und/oder ausgehend von einem gekoppelten Zustand einen zumindest teilweise entkoppelten Zustand herzustellen, wenn keine bestimmte Ausprägung des haptischen Kontakts festgestellt wird. Beispielsweise kann die Koppelungseinrichtung zusammen mit denjenigen Teilen des Fahrzeugs dargestellt sein, die das Lenkmoment, einen Radlenkwinkel oder eine Information über die angeforderte Veränderung dieser Größen von dem ersten Teil des Bedienelements zu einem Radwinkelsteller übertragen. Im Übrigen kann der Radwinkelsteller bspw. einen Aktor des Fahrzeugs umfassen, der gewünschte Lenkwinkel den Vorderrädern und/oder Hinterrädern eines bspw. Personenkraftwagens (als Fahrzeug) relativ zum Fahrgestell des Fahrzeugs bestimmt oder ansteuert.

Es kann eine bestehende Koppelung bzw. Koppelungseirichtung (egal ob vollständig oder nur bis zu einem gewissen Grad) zumindest teilweise geöffnet oder weiter geöffnet (und somit zumindest teilweise entkoppelt bzw. weiter entkoppelt) werden, wenn bspw. mittels eines Sensors in der Lenkhandhabe, wie z.B. eines entsprechend eingerichteten Hands-On-Sensors ermittelt wird, dass die Hand des Fahrers nicht an der Lenkhandhabe aufliegt bzw. der Fahrer die Lenkhandhabe nicht nach vorbestimmten Kriterien, so bspw. nicht flächig oder nicht fest genug, umfasst. Damit ist gewährleistet, dass der Fahrer die Lenkhandhabe (bspw. das Lenkrad), so er diese(s) nicht mit der Hand hält, auch nicht durch eine unbeabsichtigte Bewegung (bspw. auch eine Beinbewegung) verdrehen kann oder an einer Drehbewegung, so diese durch eine automatische Querführungsvorrichtung des Fahrzeugs ausgelöst wurde, behindern kann.

Bspw. ein Lenkrad als erfindungsgemäße Lenkhandhabe, mit welchem der Fahrer keinen hinreichenden haptischen Kontakt bzw. keine hinreichende Ausprägung desselben insbesondere mit einer Fläche seiner Hand, so bspw. in Form einer hinreichenden Umgriffskraft, hat, kann dann im Wesentlichen ohne eine Einwirkung auf den Radwinkelsteller auch einfach "durchdrehen". Selbst wenn sich der Fahrer insbesondere bei einem teil- oder hochautomatisierten Fahrzustand nicht auf das Verkehrsgeschehen konzentriert ist und sein Lenkrad relativ kräftig seitlich berührt, ohne es mit der Handfläche bis zu einem gewissen Ausmaß Grad zu umfassen, bliebe dies dann ohne jegliche Auswirkung auf den Radwinkelsteller.

Ausgehend von einem vorstehend beschriebenen Zustand kann ein zumindest teilweises oder vollständiges Wieder-Koppeln (d.h. funktionales Wieder-Verbinden) zwischen der Lenkhandhabe und dem Radwinkelsteller abhängig von weiteren vorausbestimmten Kriterien erfolgen. Insbesondere sei darauf hingewiesen, dass die besondere Ausprägung des haptischen Kontakts, bei welcher ein zumindest teilweise (oder vollständig) entkoppelter Zustand hergestellt wird, verschiedenartig zu der besonderen Ausprägung desjenigen haptischen Kontakts sein kann, bei welchem oder welcher ein zumindest teilweise (oder vollständig) gekoppelter Zustand zwischen der Lenkhandhabe und dem Radwinkelsteller hergestellt wird.

Darüber hinaus, d.h. ggf. auch unabhängig von der Ausprägung des haptischen Kontakts, kann ausgehend von einem zumindest teilweise entkoppelten Zustand ein zumindest teilweise gekoppelter Zustand hergestellt werden, wenn bspw. durch eine elektronische Steuer- und Überwachungseinheit festgestellt wird, dass eine automatische Querführung des Fahrzeugs aus welchem Grund auch immer, insbesondere aus einem von vorausdefinierten Gründen, nicht möglich ist. In diesem Sinne ist auch ein Not-Schaltvorgang möglich, aufgrund dessen dann der Fahrer die Führung des Fahrzeugs selbst übernehmen muss.

Ferner sei ausdrücklich erwähnt, dass eine Herstellung einer zumindest teilweisen Kopplung auch darin bestehen kann, dass der Grad der Kopplung geeignet angepasst wird. Ein bestimmter Grad einer Kopplung kann bspw. darin bestehen, dass eine Kopplung zwischen der Lenkhandhabe und dem Radwinkelsteller nur innerhalb eines bestimmten Wertebereich einer Kraft oder eines Momentes liegt, welche(s) dann übertragen wird, oder dass nur bei Überschreiten oder nur bis zum Erreichen eines bestimmten Verlagerungsweges der Lenkhandhabe (im Falle eines Lenkrades wäre dies ein bestimmter Drehwinkel bzw. Drehwinkelbereich) eine Kopplung und somit eine Übertragung einer Verlagerung der Lenkhandhabe (oder einer sonstigen Fahrerhandlung, mit welcher der Fahrer am besagten Bedienelement oder Bedienelement-Teil unzweifelhaft eindeutig einen Wunsch zur Querführung des Fahrzeugs vorgibt) zum Radwinkelsteller erfolgt.

Was das zumindest teilweise Koppeln oder Wieder-Koppeln betrifft, so kann ein solches bspw. dann erfolgen, wenn bspw. mittels eines Lenkhandhabe-Sensors, bspw. des dazu eingerichteten Hands-On-Sensors ermittelt wird, dass eine Hand des Fahrers nach vorbestimmten Kriterien an der Lenkhandhabe anliegt oder abgelegt wird, bspw. indem diese ausreichend umfasst wird. Dabei kann insbesondere auch eine Erkennung von einzelnen Fingern der Hand stattfinden. Bevorzugt kann dabei eine Überprüfung dahingehend erfolgen, dass eine bestimmte Anzahl von Fingern der Hand des Fahrers den Lenkradkranz, insbesondere in einem Bogen, mindestens in einem bestimmten Bogenwinkel oder Länge, umgreifen.

Nach dem Koppeln oder zumindest teilweisen Ankuppeln der Lenkhandhabe an den Radwinkelsteller kann der Fahrer zumindest die Querführung des Fahrzeugs mitbestimmen - vorzugsweise kann der Grad des Mitwirkens des Fahrers (nur anteiliger Einfluss des Fahrers mit einem gewünschten oder vorausbestimmten Einflussmaß oder eine im Wesentlichen vollumfängliche Steuerung durch den Fahrer) auch von der aktuellen Ausprägung des haptischen Kontakts abhängig sein. So ist auch ein teilautomatisierter Modus für die Lenkhandhabe-Vorrichtung möglich, bei welchem eine automatisches Querführungssystem des Fahrzeugs lediglich Empfehlungen an den Fahrer abgibt, und zwar vorzugsweise abermals über die Lenkhandhabe (bspw. über Vibrationen und/oder geringe Drehmomente im Falle eines Lenkrads). Eine Erkennung eines haptischen Kontakts zwischen dem Fahrer und seiner Lenkhandhabe kann damit für verschiedene Automatisierungsgrade im Zusammenwirken zwischen einem automatischen Querführungssystem und dem Fahrer genutzt werden.

Zurückkommend auf die Ausprägung oder das Maß des haptischen Kontakts zwischen dem Fahrer und der Lenkhandhabe (bzw. dem Bedienelement oder Bedienelement-Teil) kann dieses auch unterschiedlich für zumindest zwei verschiedene Teile der Lenkhandhabe bzw. des besagten Querführungs-Bedienelementes ermittelt und berücksichtigt werden. Das Maß des haptischen Kontakts kann dabei mittels einer zweckmäßig eingerichteter Sensorik, so bspw. eines Lenkhandhabe-Sensors erfolgen. Ein Lenkhandhabe-Sensor kann ein in einem Teil der Lenkhandhabe verbauter Sensor, beispielsweise ein zweckmäßig weitergebildeter "Hands-On-Sensor" sein.

Abhängig von unterschiedlichen Ausprägungen des haptischen Kontakts kann auch die besagte Kopplung zwischen der Lenkhandhabe und dem Radwinkelsteller unterschiedlich sein, so bspw. entsprechend vorausbestimmter, insbesondere unterschiedlich gestaltbaren, einstellbaren oder automatisch lernbaren) mathematischer Funktionen eingestellt werden. Insbesondere kann ein kumuliertes Maß basierend auf zumindest zwei oder mehreren Maßen des haptischen Kontakts berücksichtigt werden. Es können zumindest zwei unterschiedliche kumulierte Maße vorausdefiniert sein, die jeweils zum Erreichen unterschiedlicher Grade der Kopplung zwischen der Lenkhandhabe (oder dgl.) und dem Radwinkelsteller erforderlich sind.

Was nun die soeben genannten unterschiedlichen Grade der Kopplung zwischen Lenkhandhabe und Radwinkelsteller betrifft, so kann neben einem vollständig entkoppelten Zustand, in welchen keinerlei Verbindung zwischen der Lenkhandhabe und dem Radwinkelsteller besteht, und einem vollständig gekoppelten Zustand der Lenkhandhabe, in welchem ausschließlich der Fahrer den Radlenkwinkel mittels der Lenkhandhabe vorgibt, zumindest ein Zwischenzustand vorgesehen sein, in welchem ein Rad-Lenkwinkel sowohl vom Fahrer über die Lenkhandhabe einstellbar ist, als auch von einer das Fahrzeug zumindest teilweise querdynamisch automatisiert steuernden Steuereinheit letztlich am Radwinkelsteller vorgebbar ist. Es kann somit der besagte Grad der Kopplung zwischen zumindest einem Teil des Bedienelements und dem Radwinkelsteller in zumindest zwei Stufen und/oder einer kontinuierlichen oder in einer quasikontinuierlichen Abhängigkeit zum Maß des haptischen Kontakts, so bspw. einem bestimmten Muster des Umgreifens des Bedienelements, zwischen dem Fahrer und dem Bedienelement-Teil gesteuert werden. Dabei kann der Grad der Kopplung unterschiedliche und bspw. adaptiv steuerbare Werte annehmen, so bspw. einen der Folgenden. Neben einer "wesentlichen Entkoppelung"; ist auch eine Koppelung nur in gewissen Grenzen oder mit gewissen Randbedingungen möglich, so bspw. bis zum Erreichen eines bestimmtem Kraft- oder Momenten-Limits, und/oder innerhalb bestimmter Bewegungsgrenzen der Lenkhandhabe (Im Falle eines Lenkrads mit einer oder mehreren Winkelbegrenzungen), wobei jenseits der Begrenzungen keine oder eine auf bestimmte Weise veränderte Kennlinie der Beeinflussung der Bewegung des Fahrzeugs auf eine Vorgabe mit der Lenkhandhabe hin umgesetzt wird. Unter verschiedenen Graden der Koppelung zwischen der Lenkhandhabe und einem Radwinkelsteller kann aber auch eine Veränderung des Übersetzungsverhältnisses (zwischen einer bestimmten Verlagerung der Lenkhandhabe und dem zugehörigen Radlenkwinkel) verstanden werden. Dabei können unterschiedlichen Übersetzungsverhältnisse für unterschiedliche Drehwinkelbereiche (eines Lenkrads) gelten und/oder es können die zumindest zwei unterschiedlichen Übersetzungsverhältnisse auch abhängig von einem oder mehreren Winkelschwellwerten (eines Lenkrads) eingestellt werden. (Für andersartig bewegbare Lenkhandhaben ist anstelle eines Winkels eine dementsprechende Größe einer Auslenkung oder Bewegung zu setzen). Selbstverständlich sind unterschiedliche Grade (der Kopplung) dabei in kleinen Stufen oder stufenlos möglich. Somit kann eine erfindungsgemäße Vorrichtung zumindest einen, bevorzugt zwei oder mehrere Grade einer Kopplung aufweisen, der oder die sich von einem im Wesentlichen gekoppelten und/oder im Wesentlichen entkoppelten Zustand unterscheiden. Die zumindest zwei solchen Grade der Kopplung können sich dabei sowohl durch qualitative Merkmale, insbesondere logische Zusammenhänge und/oder durch die Parameter der Kopplung wesentlich, insbesondere prinzipiell, voneinander unterscheiden.

An einer erfindungsgemäßen Lenkhandhabe-Vorrichtung kann die besagte Ausprägung des haptischen Kontakts ein Ausmaß und/oder ein Muster hinsichtlich Druck oder elektrischer Kapazität oder Induktivität des haptischen Kontakts zwischen zumindest einer Hand des Fahrers und der Lenkhandhabe (bzw. dem zumindest einen Teil des Bedienelements) sein. Dabei kann das Ausmaß örtlich beschränkt sein, so bspw. nur über gewisse Teilflächen der Lenkhandhabe von Bedeutung sein und dementsprechend auch nur dort ermittelt werden, und/oder das genannte Muster kann ein Flächenmuster sein. Bei den beispielhaft letztgenannten Mustern kann es sich bspw. um ein Flächenmuster und/oder ein zeitliches Muster handeln, und zwar bspw. hinsichtlich des anliegenden Drucks, welcher von einer Hand und/oder zwei Händen des Fahrers an der Lenkhandhabe vorliegt. Solche Muster oder Druckmuster können bspw. mit einem kapazitiven oder piezoelektrischen Sensor in der Lenkhandhabe ermittelt werden, so bspw. mit Hilfe einer geeigneten Weiterbildung eines an sich bekannten Hands-On-Sensors. Dieser kann befähigt sein, auch zumindest zweidimensionale Muster zu erfassen und insbesondere zu erkennen bzw. zu klassifizieren. Dabei kann auch eine Erkennung von (einzelnen) Fingern erfolgen. Bevorzugt kann auch die Position bzw. Stellung der Finger zu den Teilen des Bedienelements ermittelt und berücksichtigt werden. Besonders bevorzugt können kann auch die Veränderung (z.B. eine Veränderung des Maßes des Haptischen Kontakts) erfasst und berücksichtigt werden.

Das Erfassen eines zweidimensionalen Musters kann dabei mittels einer in den Lenkradkranz verbauten Sensormatte erfolgen. Dabei kann eine erfindungsgemäße Vorrichtung auch zur Ausführung eines zumindest zweidimensionalen Mustererkennungsverfahrens ausgestaltet sein, welches sich beispielsweise der an sich bekannten Methoden der Bildverarbeitung bedienen kann. Dabei kann das zumindest zweidimensionale Mustererkennungsverfahren auf einen Teil der Oberfläche des Lenkradkranzes angewandt werden, derart, dass die Oberfläche auf eine zweidimensionale Fläche abgebildet wird. Es kann die Vorrichtung mit einem dreidimensionales Mustererkennungsverfahren ausgestaltet sein, wobei eine der Dimensionen einen Zeitverlauf repräsentiert.

Ein Ausmaß des haptischen Kontakts zwischen dem Fahrer des Fahrzeugs und der Lenkhandhabe kann somit ein Zeit- und/oder Flächen-Muster aus kapazitiv erfassten Messwerten umfassen, die von einer Hand und/oder zwei Händen des Fahrers an der Lenkhandhabe des Fahrzeugs erzeugt werden. Selbstverständlich ist alternativ oder zusätzlich eine Anwendung auch eines induktiven Sensierungsprinzips möglich. Zusätzlich oder alternativ kann ein im Innenraum des Fahrzeugs vorgesehenes Kamerasystem (Bilderfassungssystem) genutzt werden, um das Maß des haptischen Kontakts zwischen den Händen des Fahrers und der Lenkhandhabe (bzw. zumindest eines Teils des Bedienelement zur Fzg.-Querführung) bspw. mittels einer optischen Objekterkennung zu erfassen.

Beispielsweise (aber ausdrücklich nicht hierauf begrenzt) kann an einer erfindungsgemäßen Lenkhandhabe-Vorrichtung und insbesondere wenn eine vollständige Entkopplung durchgeführt wird, vorgesehen sein, dass die Lenkhandhabe oder zumindest ein Teil derselben dann bspw. fest (aber nichts zwangsweise hart verrastend) mit einem Fahrzeugaufbau verbunden und somit vom Fahrer nicht verlagerbar ist. Eine erfindungsgemäße Vorrichtung kann also dahingehend weitergebildet sein, dass der Grad der Kopplung eines ersten oder zumindest eines zweiten Teils des Bedienelements zu einer festen Position im Koordinatensystem des Fahrzeugs (beispielsweise zu einem im Koordinatensystem des Fahrzeug ruhenden Teil des Fahrzeugs, naheliegenderweise zur Armaturentafel) gesteuert wird, wobei sich der zweite Teil des Querführungs-Bedienelements bevorzugt von dem ersten Teil dieses Bedienelements unterscheidet. In diesem Sinne kann also vorgesehen sein, dass ein Grad der Kopplung zumindest einen Teil der Lenkhandhabe bezüglich der Karosserie des Fahrzeugs in gewissen Ausmaß feststellt. Dabei können auch alle vorliegend beschriebenen Grade der Kopplung auch auf die Kopplung des zumindest eines Teils des Bedienelements zu einer festen Position im Koordinatensystem des Fahrzeugs, z.B. zu einem im Koordinatensystem des Fahrzeugs unbeweglichen Teil des Fahrzeugs, übertragen bzw. angewendet werden.

Ohne die vorliegende Erfindung hierauf beschränken zu wollen kann von einem in seinem Erscheinungsbild üblichen Lenkrad bspw. nur der Lenkradkranz fest mit einem Karosserieteil (bspw. der Armaturentafel) und somit mit dem Fahrzeugaufbau verbunden werden. Der Fahrer kann dann selbst nicht auf den Radwinkelsteller einwirken, selbst wenn er versehentlich die Lenkradkranz (als Lenkhandhabe) berührt oder bspw. durch eine Bewegung seiner Beine verdrehen würde. Vorteilhafterweise kann sich dann der Fahrer bspw. am Lenkradkranz abstützen, oder diesen nach Art eines Ablagetisch nutzen. Alternativ oder zusätzlich kann selbstverständlich auch ein innerer, d.h. zentraler Abschnitt des Lenkrads (bzw. einer erfindungsgemäßen Lenkhandhabe) fest mit dem Fahrzeugaufbau verbunden werden, so dass das solchermaßen vom Radwinkelsteller bspw. vollständig entkoppelte Lenkrad (bzw. die Lenkhandhabe oder noch allgemeiner Teil des Querführungs-Bedienelements) auch variabel als eine feste Ablage nach Art eines Computertisches für Büroarbeit oder dgl. verwendet werden kann.

Dabei kann zusammen mit übrigen Vorteilen der Erfindung auch der Vorteil der besseren Nutzung der Zeit für den Fahrer des zumindest teilweise automatisiert fahrenden Fahrzeugs erreicht werden. Dabei muss sich Fahrer auch nicht körperlich z.B. seitlich verrenken um ein vor ihm perfekt angeordnetes "Ablagetisch" oder eine Fläche zur Bedienung eines Bildschirms zu haben.

In diesem Zusammenhang kann an der Lenkhandhabe (im weitesten Sinne, d.h. egal, an welchem Teil derselben) eine geeignete Halterung bspw. für Anwendergeräte vorgesehen sein, welche in einer vorteilhaften Weiterbildung eine Vorrichtung umfassen kann, welche im Falle einer Auslösung eines (wie üblich im Lenkrad eines Personenkraftwagens vorgesehen) Airbags das Anwendergerät oder die genannte Halterung, beispielsweise seitlich abwirft. Und der Vollständigkeit halber sei nochmals ausdrücklich erwähnt, dass auch hier - d.h. im Falle einer Kopplung mit einem Fahrzeug-Koordinatensystem verschiedene Grade der Kopplung wie weiter oben bereits erläutert möglich sind.

Nach einer Weiterbildung einer erfindungsgemäßen Lenkhandhabe-Vorrichtung kann der besagte Grad der Koppelung zwischen der Lenkhandhabe und dem Radwinkelsteller von zumindest einer weiteren Randbedingung abhängig sein, so bspw. von einer Betätigung eines weiteren Bedienelements (wie bspw. eines Pedals) durch den Fahrer. Bspw. kann eine zweite Bedingung für eine Veränderung des Grads der Kopplung der Lenkhandhabe mit dem Radwinkelsteller eine ein vorausbestimmtes Maß überschreitende Aktion des Fahrers mit einem Bedienelement zur Steuerung der Längsführung des Fahrzeugs (wie einem Fahrpedal oder Bremspedal) umfassen. Sobald also der Fahrer eines seiner Pedale betätigt, verändert sich der Kopplungsgrad zwischen dem (bspw.) Lenkrad und dem Radwinkelsteller. Beispielsweise koppelt sich das Lenkrad wieder zumindest teilweise, bzw. stärker als zuvor, wenn der Druck auf eines der Pedale und/oder der erreichte Pedalwinkel einen gewissen Wert überschreitet. Dabei kann im Übrigen auch ein Pedal sich (zuvor) in einem zumindest teilweise entkoppelten Zustand befinden bzw. befunden haben. Es kann vorgesehen sein, dass eine Betätigung zumindest eines Pedals des Fahrzeugs eine Veränderung des Kopplungsgrads der Lenkhandhabe mit dem Radwinkelsteller zur Folge hat, wenn die Betätigung des Pedal einen ein bestimmtes Maß überschreitenden Eingriff in die Längsführung des Fahrzeugs darstellt und/oder eine Veränderung der Verkehrssituation verursacht, und/oder eine Veränderung zumindest eines seitlichen Abstands des Fahrzeugs zu einem Hindernis bewirkt oder bewirken kann, d.h. eine gewisse Kollisionswahrscheinlichkeit zur Folge hat, und/oder wenn ein Durchführen eines automatisierten Manövers durch einen Eingriff des Fahrers nicht mehr ausgeführt werden kann.

Ein weiteres Beispiel für eine vorstehend genannte weitere Randbedingung kann eine geeignete automatische Erkennung eines Übernahmewillens und/oder der Übernahmefähigkeit des Fahrers in Bezug auf eine insbesondere bestimmte, bspw. bevorstehende Fahraufgabe, insbesondere die Lenkung oder Querführung des Fahrzeugs, sein. Eine erfindungsgemäße Vorrichtung kann somit ausgestaltet sein, einen Übernahmewillen, insbesondere in Bezug auf zumindest die Querführung und/oder Längsführung des Fahrzeugs und/oder eine Lenkungsfähigkeit des Fahrers in Bezug auf eine (bestimmte, insbesondere bevorstehende) Fahraufgabe, insbesondere im Zusammenhang mit der Lenkung des Fahrzeugs zu erkennen, und den Grad der Kopplung des besagten Teils des Bedienelements abhängig vom erkannten Maß des Übernahmewillens und/oder der Übernahmefähigkeit zu steuern, d.h. abhängig von einer solchen Erkennung kann dann der Grad der Kopplung zwischen Lenkhandhabe bzw. dem Bedienelement und dem Radwinkelsteller gesteuert werden. Beispielsweise kann hierzu eine Analyse von Körpergesten, wie z.B. eine Geste zur Bedienung des Lenkrads und/oder eine Geste zur Bedienung eines Pedals und/oder eine (schnelle) Körperbewegung von einer bspw. halbliegenden Haltung zu einer fahrbereiten Haltung genutzt werden. Der Übernahmewille bzw. die Übernahmefähigkeit kann dabei mittels einer Innenraumkamera des Fahrzeugs festgestellt werden, bspw. wenn sich die erkannten Hände des Fahrers zum Lenkrad bewegen oder dieses ergreifen. Analog kann hierzu die Bereitschaft des Fahrers, ein Pedal zu bedienen, erkannt werden. Auch eine Kombination solchen Gesten-Erkennungen ist möglich. Auch kann eine Kopplung bspw. im Falle einer Nicht-Übernahmefähigkeit verhindert oder auch an weitere vorausbestimmte Bedingungen geknüpft werden.

An einer erfindungsgemäßen Lenkhandhabe-Vorrichtung kann eine den besagten Grad der Koppelung bestimmende Ausprägung des haptischen Kontakts von einem aktuellen oder bevorstehenden Fahrmanöver des Fahrzeugs abhängig sein. Die Vorrichtung kann somit ausgestaltet sein, ein aktuelles oder voraussichtliches zumindest teilweise ausgeführtes Fahrmanöver zu ermitteln und daraufhin unterschiedliche Maße, insbesondere Schwellenwerte für das Maß des haptischen Kontakts als Voraussetzung für eine Veränderung des Grades der Kopplung, also bspw. eine Entkoppelung und/oder eine Koppelung zwischen der Lenkhandhabe und dem Radwinkelsteller anzuwenden. Je nach einem aktuell vorliegenden oder prädizierten Manöver des Fahrzeugs wird ein unterschiedliches Maß des haptischen Kontakts zur Veränderung des Grades der Kopplung vorausgesetzt. Ein aktuell durchgeführtes oder prädiziertes, insbesondere geplantes Manöver kann dabei beispielsweise aus einer automatisierten Manöversteuerung, aus einer sogenannten Bahnplanung, und/oder aus der Erkennung der Fahrerabsicht und/oder aus der Erkennung der Absicht weiterer Verkehrsteilnehmer ermittelt werden.

Weiterhin kann eine erfindungsgemäße Lenkhandhabe-Vorrichtung ausgebildet sein, ihre für den Fahrer spürbare haptische Eigenschaft in Abhängigkeit vom besagten Grad der Koppelung zu ändern. In vergleichbarer Weise kann die Lenkhandhabe dem Fahrer in Abhängigkeit vom besagten Grad der Koppelung ein haptisches Signal übermitteln. Damit kann der Fahrer quasi intuitiv darüber informiert werden, dass die Lenkhandhabe-Vorrichtung den Grad der Kopplung verändert bzw. in welcher Weise eine aktuelle Veränderung erfolgt. Bspw. kann hierfür ein haptisches Profil, wie bspw. eine Rauigkeit an der Oberfläche der Lenkhandhabe elektronisch ansteuerbar sein.

Ehe noch weitere Merkmale und Vorteile erläutert werden, sei ausdrücklich darauf hingewiesen, dass vorliegend zwar umfangreich von einer Lenkhandhabe-Vorrichtung geschrieben ist, dass aber daneben oder alternativ auch ein Betriebsverfahren für eine Lenkhandhabe offenbart und beanspruchbar ist, welche zumindest ein vorliegend beschriebenes verfahrenstechnisches Merkmal aufweist.

Ein solches verfahrenstechnisches Merkmal ist dabei das Erkennen der Ausprägung oder des Maß eines haptischer Kontakts zwischen dem Fahrer und der Lenkhandhabe (oder dgl.) sowie ggf. einer geeigneten Reaktion hierauf. Dieses Maß des haptischen kann bevorzugt ein Maß der Kontaktfläche, insbesondere zwischen der Hand (Handfläche) des Fahrers mit dem Lenkrad des Fahrzeugs umfassen, und/oder einen Druck, insbesondere als die gesamte Andruckkraft und/oder Druckverteilung und/oder Druck pro Kontaktfläche und/oder Bereiche der Handfläche die (zu einem relevanten Zeitintervall) einen haptischen Kontakt mit der Lenkhandhabe haben oder voraussichtlich haben werden, und/oder die Anspannung und/oder Position eines oder mehrerer Finger des Fahrers. Berücksichtigt werden dabei vorzugsweise solche Bereiche der Lenkhandhabe, die (zu dem relevanten Zeitintervall) einen haptischen Kontakt mit dem Fahrer haben sollten oder voraussichtlich haben werden.

Dabei kann ein Maß des haptischen Kontakts durch ein Maß eines kapazitiven und/oder induktiven Wertes zwischen dem Steuerelement und dem Fahrer (einer oder zwei Handflächen des Fahrers) beschrieben bzw. repräsentiert werden kann. So kann das Maß des kapazitiven Kontakts und/oder induktiven Kontakts beispielsweise mittels eines in einem Lenkrad des Fahrzeugs integrierten kapazitiven Sensors und/oder eines Lenkradbeheizungsdrahts erfasst werden. Alternativ oder zusätzlich kann der (physikalischer) Druck oder die Druckverteilung der Hand (bzw. Handflächen) des Fahrers auf das (manuelle) Bedienelement zur Querführung des Fahrzeugs erfasst werden.

Faktisch kann das Erkennen des haptischen Kontakts dann abhängig sein von einem oder mehreren Druckwerten und/oder Kapazitätswerten oder einer Änderung der Druckwerte und/oder Kapazitätswerte, welche am bspw. Lenkrad des Fahrzeugs durch eine oder zwei Hände des Fahrers verursacht werden. Bevorzugt wird der haptische Kontakt durch ein oder mehrere bestimmte Maße repräsentiert. Dabei kann unterschieden werden zwischen einer leichten (nahezu kraftlosen) Berührung der Lenkhandhabe mit einer Hand oder mit zwei Händen und einem Umgreifen der Lenkhandhabe mit einer oder mit zwei Händen des Fahrers sowie einer ausgeprägten Kraftkopplung zwischen der einen oder zwei Händen des Fahrers und der Lenkhandhabe. Letztere kann durch ein enges und/oder flächiges Anliegen oder eine Reibungskraft repräsentiert sein.

Ferner kann auch ermittelt werden, wenn kein oder kein hinreichender haptischer Kontakt zwischen einer oder beiden Händen des Fahrers besteht, insbesondere wenn dieser ein vorausbestimmtes Maß (im Hinblick auf eine ausreichende Übertragung des Fahrerwunsches) unterschreitet oder wenn für eine Unterscheidung einer (bestimmten) haptischen Fahrerinformation kein hinreichender haptischer Kontakt besteht. Als Maß des haptischen Kontakts zwischen dem Fahrer des Fahrzeugs und der Lenkhandhabe kann ein Maß repräsentierend eine kapazitive Kopplung, die durch eine und/oder zwei Hände des Fahrers verursacht wird, genutzt werden. Ferner können zu diesem Zweck auch induktive Sensierungsprinzipien und alternativ oder zusätzlich ein Kamerasystem im Innenraum des Fahrzeugs genutzt werden, um die besagte Ausprägung des haptischen Kontakts zu erfassen.

Für den Fahrer ergibt sich mit einer erfindungsgemäßen Lenkhandhabe-Vorrichtung eine besonders angenehme, wirksame, leicht verständliche und insbesondere nicht unbewusst falsch bedienbare Lenkhandhabe. Insbesondere ist der Widerspruch zwischen einem kraftmäßig zu starken und einem zu schwachem Eingriff eines automatischen Fahrzeug-Querführungssystem auflösbar. Ohne nachteilige Folgen befürchten zu müssen, kann der Fahrer vollständig auf ein automatisches Querführungssystem des Fahrzeugs vertrauen, insbesondere da die Wahrscheinlichkeit für eine Fehlbedienung erheblich reduziert ist. Es besteht eine bessere Selektivität für den Fahrer je nach Fahrsituationen, d.h. ob er selbst steuern will oder das Fahrzeug automatisch steuern lassen will. Somit besteht auch eine bessere situative Wahl zwischen vielen und wenigen Eingriffen entweder des Fahrers in die automatische Querführung oder eines zumindest teilautomatischen Querführungssystems in die Querführungsaktionen des Fahrers.

Ferner umfasst die Erfindung auch eine elektronische Steuereinheit, welche ein zur Ausführung eines wesentlichen Teils eines solches oder vergleichbares Betriebsverfahren, insbesondere zum Ermitteln der Steuersignalen ausgestaltet ist. Eine solche Steuereinheit kann dabei zusammen oder getrennt mit der Lenkhandhabe und/oder mit einem weiteren System des Fahrzeugs, beispielsweise mit dem System zur Ausführung eines zumindest teilweise automatisierten Fahrens verbaut werden.

Ferner umfasst die Erfindung auch ein Computerprogramm, insbesondere ein Computerprogrammprodukt umfassend das Computerprogramm, wobei das Computerprogramm ausgebildet ist, auf einer Datenverarbeitungsvorrichtung eines Fahrzeug oder eines mobilen Anwendergeräts einen Teil des erfindungsgemäßen Betriebsverfahrens oder eine vorteilhafte Ausgestaltung des Verfahrens gemäß einem oder mehrerer weiterer Merkmale des Betriebsverfahrens bei seiner Ausführung durchzuführen. Insbesondere handelt es sich bei dem Computerprogramm um ein Softwareprogramm, welches beispielsweise als eine App ( = "Applikation") auf einer im Fahrzeug verbauten oder mitführbaren elektronische Steuervorrichtung lauffähig ist. Ein Teil der Steuervorrichtung kann dabei ein mobiles Anwendergerät sein.

Das Computerprogramm bzw. Computerprogrammprodukt umfasst dabei einen ausführbaren Programmcode, der bei einer Ausführung durch eine Datenverarbeitungsvorrichtung zumindest einen Teil des Verfahrens gemäß einem vorliegend beschriebenen Aspekt oder eine vorteilhafte Ausgestaltung des vorliegend beschriebenen Verfahrens ausführt. Das Computerprogrammprodukt kann dabei als ein Update eines bisherigen Computerprogramms ausgebildet sein, welches beispielsweise im Rahmen einer Funktionserweiterung, beispielsweise im Rahmen eines sogenannten "Remote Software Update" die Teile des Computerprogramms bzw. des entsprechenden Programmcode für eine entsprechende Steuervorrichtung des Fahrzeug umfasst.

Die Lenkhandhabe-Vorrichtung kann eine fest ins Fahrzeug verbaute Vorrichtung sein, umfassend die zumindest eine elektronische Steuereinheit und das zumindest eine Bedienelement, welches als Lenkhandhabe, insbesondere Lenkrad, Lenker, etc. ausgestaltet ist. Ferner kann die Vorrichtung auch einen oder mehrere Sensoren des Fahrzeugs oder eines mobilen Anwendergeräts umfassen, die zur Ausführung des Verfahrens ausgebildet sind.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden.

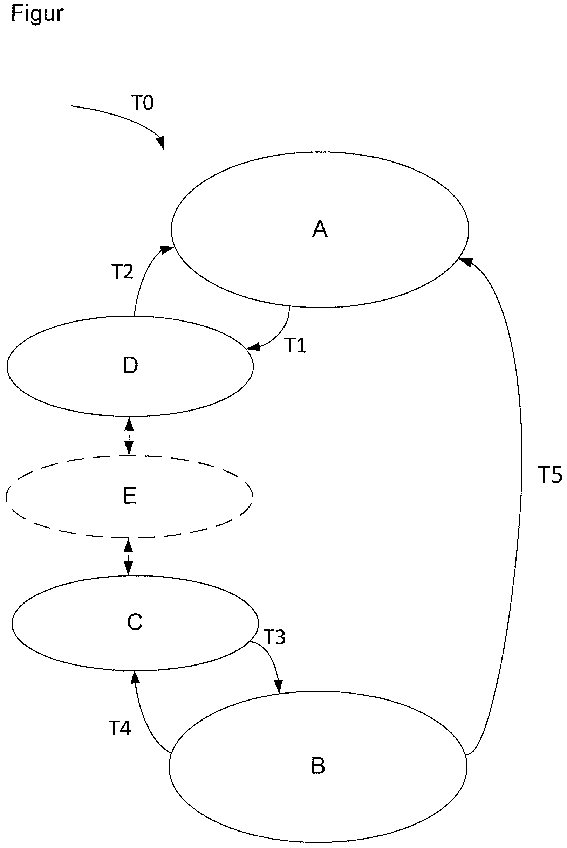

Die beigefügte Figur zeigt schematisch ein mögliches Zustandsdiagramm einer erfindungsgemäßen Vorrichtung.

Dabei sind in den Ovalen verschiedene mit Buchstaben (A, B, C, D, E) gekennzeichnete im weiteren kurz beschriebene Zustände einer erfindungsgemäßen Vorrichtung dargestellt, welche unterschiedliche Grade der Kopplung zwischen einer Fzg.-Lenkhandhabe bzw. einem Fahrer-Bedienelement zur Querführung des Fahrzeugs und einem Radwinkelsteller des Fahrzeugs (bspw. Personenkraftwagens) repräsentieren. Die Pfeile T1, T2, T3, T4, in der Figur zeigen in diesem Beispiel kurz beschriebene Transitionen (Zustandsübergänge), zwischen den Zuständen A, B, C, D, E, welche (prinzipiell) unterschiedliche Grade der Kopplung repräsentieren. Diese Zustandsübergänge sind an vorausbestimmte Bedingungen geknüpft. Dabei wird dieses figürlich dargestellte Zustandsdiagramm, bzw. ein dementsprechend ausgestalteter Zustandsautomat ausgeführt, wenn eine Bedingung T0 zutrifft. In diesem Beispiel besagt eine solche Bedienung T0, dass das Fahrzeug, bzw. die automatisierte Querführung des Fahrzeugs steuernde elektronische Steuereinheit, bereit ist eine automatisierte Querführung des Fahrzeugs auszuführen. Es folgt eine kurze Beschreibung der, hier beispielhaft definierten Zustände und der Transitionen mit den Bedingungen für die Zustandsübergänge:
"A" stellt einen Zustand dar, in welchem zumindest ein erster Teil der Lenkhandhabe bzw. des Querführungs-Bedienelements im Wesentlichen an einen Radwinkelsteller des Fahrzeugs gekoppelt ist, so dass quasi eine übliche manuelle Lenkung vorliegt.

"B" stellt einen Zustand dar, in welchem ein erster Teil des Bedienelements oder die Lenkhandhabe im Wesentlichen vom Radwinkelsteller entkoppelt oder abgekoppelt ist, d.h. hier kann bspw. eine voll automatisierte Lenkung vorliegen.

"C" stellt als einen möglichen Zwischenzustand (zwischen A und B) und somit als einen möglichen Grad der Kopplung einen Zustand dar, in welchem ein Beschränkung Winkelbereich, bei welchem es sich um einen Drehwinkelbereich der Lenkhandhabe oder um einen Radwinkelbereich, innerhalb dessen ein Radwinkel gestellt werden kann, beschränkt ist.

"D" stellt einen Zustand dar, in welchem ein veränderter, zweckmäßig angepasster Übersetzungsgrad, zwischen dem Lenkwinkel des Teils der Bedienelements und einem Radwinkelsteller, insbesondere innerhalb und/oder außerhalb vorausbestimmter Winkelgrenzen ausgeführt wird.

"E" steht stellvertretend für weitere mögliche Grade der besagten Kopplung.

Der Zustandsübergang T1 wird ausgeführt wenn ermittelt wird, dass ein Maß des haptischen Kontakts zwischen dem Fahrer und der Lenkhandhabe, bspw. eine Umgriffskraft an der Lenkhandhabe abnimmt und/oder unter eine erste Schwelle gesunken ist, und/oder wenn bspw. ein vorgegebenes haptisches erstes Muster bspw. seit einigen Sekunden nicht mehr erkannt worden ist.

Der Zustandsübergang T2 wird ausgeführt wenn ermittelt wird, dass ein Maß des haptischen Kontakts zwischen dem Fahrer und der Lenkhandhabe, d.h. wenn bspw. eine Umgriffskraft an der Lenkhandhabe steigt und/oder eine zweite Schwelle überstiegen hat, und/oder wenn das Vorliegen bzw. die Erfüllung eines vorgegebenen ersten haptischen Musters erkannt wurde. Der Zustandsübergang T3 wird ausgeführt wenn ermittelt wird, dass ein Maß des haptischen Kontakts zwischen dem Fahrer und der Lenkhandhabe, d.h. wenn bspw. eine Umgriffskraft an der Lenkhandhabe (weiter) sinkt und/oder unter eine dritte Schwelle gesunken ist, und/oder wenn bspw. ein vorgegebenes zweites haptisches Muster bspw. seit einigen Sekunden nicht mehr erkannt worden ist.

Der Zustandsübergang T4 wird ausgeführt wenn ermittelt wird, dass ein Maß des haptischen Kontakts zwischen dem Fahrer und der Lenkhandhabe, d.h. wenn bspw. eine Umgriffskraft an der Lenkhandhabe eine vierte Schwelle übersteigt oder überstiegen hat, und/oder wenn das Vorliegen bzw. die Erfüllung eines vorgegebenen zweiten haptischen Musters erkannt wurde.

Der Zustandsübergang T5 wird ausgeführt wenn ermittelt wird, dass eine vorliegende aktuelle Verkehrssituation nicht oder nicht hinreichend automatisch gelöst werden kann und/oder wenn der Fahrer an einem anderen Bedieneinheit wie bspw. einem Pedal eine Bedienhandlung vornimmt, und/oder falls an der Lenkhandhabe ein haptischer Kontakt festgestellt wird, dessen bspw. Umgriffskraft eine besonders hohe fünfte Schwelle überschritten hat oder wobei ein vorgegebenes drittes haptisches Muster erkannt wurde.

In dem Zustandsdiagramm ist der Zustandsübergang T5 in Bezug auf einen Übergang aus dem Zustand B zu dem Zustand A dargestellt. Dieselben oder vergleichbaren Zustandsübergänge können auch aus jedem der anderen Zustände vorgesehen werden. Dabei kann der Fahrer und/oder eine automatisierte Querführung des Fahrzeugs eine Rückkehr zu einem im Wesentlichen gekoppelten Zustand, beispielsweise zum Zustand A veranlassen.

Im figürlich dargestellten beispielhaften Zustandsdiagramm sind die Grade der Kopplung nur unvollständig und vereinfacht dargestellt. Abweichend von dieser Darstellung ist auch ein kontinuierlicher Übergang zwischen den Graden der Kopplung möglich. Auch kann der Grad der Kopplung, insbesondere Winkelgrenzen oder Winkelbereiche innerhalb der Kopplungszustände abhängig von der Erkennung von Mustern und/oder nach weiteren vorausbestimmten Bedingungen angepasst werden. Vorzugsweise kann darüber hinaus eine (im Diagramm nicht dargestellte) nahezu sofortige Kopplung und/oder Entkopplung des Lenkrads auch nach weiteren vorausbestimmten Bedingungen, bspw. bei Vorliegen eines Fehlers in der automatisierten Querführung und/oder eines groben Fehlers des Fahrers aus jedem der Zustände erreichbar sein.

## Patentansprüche

1. Vorrichtung zur Steuerung eines zumindest teilweise automatisiert fahrbaren Fahrzeugs mit einem von einem Fahrer bedienbaren Bedienelement zur Steuerung zumindest der Querführung des Fahrzeugs und mit einem Radwinkelsteller, welcher angesteuert vom Bedienelement des Fahrers und/oder von einer die automatisierte Querführung des Fahrzeugs steuernden elektronischen Steuereinheit an den lenkbaren Rädern des Fahrzeugs einen Lenkwinkel steuert, **dadurch gekennzeichnet, dass** der Grad der Kopplung zwischen zumindest einem ersten Teil des Bedienelements und dem Radwinkelsteller des Fahrzeugs und/oder zwischen zumindest einem ersten Teil des Bedienelements und einer festen Position im Koordinatensystem des Fahrzeugs abhängig von dem Maß des haptischen Kontakts des Fahrers des Fahrzeugs zum genannten ersten Teil des Bedienelements veränderbar ist, wobei bei dem Maß des haptischen Kontakts eine Druckkraft des Fahrers an dem ersten Teil des Bedienelements und/oder eine Fläche des haptischen Kontaktes auf dem ersten Teil des Bedienelements berücksichtigt ist und/oder berücksichtigt ist, an welcher Stelle des ersten Teils des Bedienelements der haptische Kontakt besteht und/oder berücksichtigt ist, ob der erste Teil des Bedienelements mit einer oder zwei Händen des Fahrers ergriffen ist.

2. Vorrichtung nach Anspruch 1, wobei eine elektronische Steuereinheit die Kopplung zumindest teilweise öffnet und damit den Grad der Koppelung verringert, wenn sich das Maß des besagten haptischen Kontakts verringert.

3. Vorrichtung nach Anspruch 1 oder 2, wobei eine elektronische Steuereinheit die Kopplung zumindest teilweise schließt und damit den Grad der Kopplung erhöht, wenn sich das Maß des besagten haptischen Kontakts erhöht.

4. Vorrichtung nach einem der vorangegangenen Ansprüche, wobei der Grad der Kopplung zwischen zumindest einem Teil des Bedienelements und dem Radwinkelsteller in zumindest zwei Stufen oder kontinuierlich oder quasikontinuierlich in Abhängigkeit vom dem Maß des haptischen Kontakts veränderbar ist.

5. Vorrichtung nach einem der vorangegangenen Ansprüche, wobei das Maß des haptischen Kontakts zwischen dem Fahrer und dem Bedienelement ein Muster des haptischen Kontakts auf Basis desjenigen Drucks umfasst, der durch zumindest eine Hand des Fahrers am Bedienelement anliegt.

6. Vorrichtung nach einem der vorangegangenen Ansprüche, wobei das Maß des haptischen Kontakts zwischen dem Fahrer und dem Bedienelement ein Muster des haptischen Kontakts auf Basis eines Flächenmusters aus kapazitiv erfassten Messwerten umfasst.

7. Vorrichtung nach einem der vorangegangenen Ansprüche, wobei der Grad der Kopplung zumindest eines zweiten Teils des Bedienelements zu einer festen Position im Koordinatensystem des Fahrzeugs gesteuert oder festlegbar ist und wobei sich der zweite Teil von dem ersten Teil unterscheidet.

8. Vorrichtung nach einem der vorhergehenden Ansprüche, wobei eine Veränderung des Grads der Kopplung des Bedienelements oder eines Teil hiervon abhängig von einer ein vorausbestimmtes Maß überschreitenden Aktion des Fahrers an einer anderen Bedieneinheit zur Führung des Fahrzeugs ist.

9. Vorrichtung nach einem der vorausgegangenen Ansprüche und ausgestaltet, einen Übernahmewillen und/oder eine Lenkungsfähigkeit des Fahrers in Bezug auf eine Fahraufgabe zu erkennen und den Grad der Kopplung zumindest eines Teils des Bedienelements abhängig vom erkannten Maß des Übernahmewillens und/oder der Übernahmefähigkeit zu steuern.

10. Vorrichtung nach einem der vorangegangenen Ansprüche und ausgestaltet, ein aktuell durchgeführtes oder voraussichtliches zumindest teilweise ausgeführtes automatisches Manöver zu ermitteln und daraufhin unterschiedliche Maße des haptischen Kontakts als Voraussetzung für eine Veränderung des Grades der Kopplung anzuwenden.

11. Vorrichtung nach einem der vorangegangenen Ansprüche und ausgestaltet, zumindest ein haptisches Signal an zumindest einem Teil des Bedienelements im Zusammenhang mit einer Veränderung des Grades der Kopplung auszugeben und/oder zumindest eine haptische Eigenschaft zumindest eines Teils des Bedienelements im Zusammenhang mit dem aktuellen Grad der Kopplung zu verändern, insbesondere festzulegen.

12. Betriebsverfahren für eine Vorrichtung, welche nach einem der vorangegangenen Ansprüche ausgebildet ist, wobei der Grad der Kopplung zwischen zumindest einem ersten Teil des Bedienelements und dem Radwinkelsteller des Fahrzeugs und/oder zwischen zumindest einem ersten Teil des Bedienelements und einer festen Position im Koordinatensystem des Fahrzeugs abhängig von dem Maß des haptischen Kontakts des Fahrers des Fahrzeugs zum genannten ersten Teil des Bedienelements verändert wird, wobei bei dem Maß des haptischen Kontakts eine Druckkraft des Fahrers an dem ersten Teil des Bedienelements und/oder eine Fläche des haptischen Kontaktes auf dem ersten Teil des Bedienelements berücksichtigt wird und/oder berücksichtigt wird, an welcher Stelle des ersten Teils des Bedienelements der haptische Kontakt besteht und/oder berücksichtigt wird, ob der erste Teil des Bedienelements mit einer oder zwei Händen des Fahrers ergriffen wird.

13. Elektronische Steuereinheit, welche ausgebildet ist, eine Vorrichtung nach einem der vorangegangenen Ansprüche 1-11 zu betreiben, wobei die elektronische Steuereinheit eingerichtet ist, den Grad der Kopplung zwischen zumindest einem ersten Teil des Bedienelements und dem Radwinkelsteller des Fahrzeugs und/oder zwischen zumindest einem ersten Teil des Bedienelements und einer festen Position im Koordinatensystem des Fahrzeugs abhängig von dem Maß des haptischen Kontakts des Fahrers des Fahrzeugs zum genannten ersten Teil des Bedienelements zu verändern, wobei bei dem Maß des haptischen Kontakts eine Druckkraft des Fahrers an dem ersten Teil des Bedienelements und/oder eine Fläche des haptischen Kontaktes auf dem ersten Teil des Bedienelements berücksichtigt wird und/oder berücksichtigt wird, an welcher Stelle des ersten Teils des Bedienelements der haptische Kontakt besteht und/oder berücksichtigt wird, ob der erste Teil des Bedienelements mit einer oder zwei Händen des Fahrers ergriffen wird.

## Claims

1. Device for controlling a vehicle which can be driven in an at least partly automated manner, comprising an operating element which can be operated by a driver to control at least the lateral guidance of the vehicle, and comprising a wheel-angle actuator which, controlled by the operating element of the driver and/or by an electronic control unit controlling the automated lateral guidance of the vehicle, controls a steer angle on the steerable wheels of the vehicle, **characterized in that** the degree of the coupling between at least one first part of the operating element and the wheel-angle actuator of the vehicle and/or between at least one first part of the operating element and a fixed position in the coordinate system of the vehicle can be changed according to the measurement of the haptic contact of the driver of the vehicle with the above-mentioned first part of the operating element, wherein, in the case of the measurement of the haptic contact, a compressive force by the driver on the first part of the operating element and/or an area of the haptic contact on the first part of the operating element are/is taken into account and/or account is taken of the point of the first part of the operating element at which there is haptic contact and/or account is taken of whether the first part of the operating element is grasped by one or two hands of the driver.

2. Device according to Claim 1, wherein an electronic control unit opens the coupling at least in part and thus decreases the degree of the coupling when the measurement of said haptic contact decreases.

3. Device according to Claim 1 or Claim 2, wherein an electronic control unit closes the coupling at least in part and thus increases the degree of the coupling when the measurement of said haptic contact increases.

4. Device according to any of the preceding claims, wherein the degree of the coupling between at least one part of the operating element and the wheel-angle actuator can be changed in at least two steps or continuously or almost continuously according to the measurement of the haptic contact.

5. Device according to any of the preceding claims, wherein the measurement of the haptic contact between the driver and the operating element includes a pattern of the haptic contact based on the pressure that is applied to the operating element by at least one hand of the driver.

6. Device according to any of the preceding claims, wherein the measurement of the haptic contact between the driver and the operating element includes a pattern of the haptic contact based a surface pattern composed of capacitively detected measurement values.

7. Device according to any of the preceding claims, wherein the degree of the coupling of at least one second part of the operating element relative to a fixed position in the coordinate system of the vehicle is controlled or can be set, and wherein the second part is different from the first part.

8. Device according to any of the preceding claims, wherein a change in the degree of the coupling of the operating element or part thereof is dependent on an action, exceeding a preset measurement, of the driver on another operating unit for guiding the vehicle.

9. Device according to any of the preceding claims and configured to detect that the driver has a takeover wish and/or is able to steer in relation to a driving task, and to control the degree of the coupling of at least one part of the operating element according to the detected measurement of the wish to take over and/or of the ability to take over.

10. Device according to any of the preceding claims and configured to identify an automatic manoeuvre that is currently being carried out or is expected to be performed at least in part and consequently apply different measurements of the haptic contact as a prerequisite for a change in the degree of the coupling.

11. Device according to any of the preceding claims and configured to output at least one haptic signal to at least one part of the operating element in connection with a change in the degree of the coupling and/or to change, in particular set, at least one haptic property of at least one part of the operating element in connection with the current degree of the coupling.

12. Operating method for a device which is designed according to any of the preceding claims, wherein the degree of the coupling between at least one first part of the operating element and the wheel-angle actuator of the vehicle and/or between at least one first part of the operating element and a fixed position in the coordinate system of the vehicle is changed according to the measurement of the haptic contact of the driver of the vehicle with the above-mentioned first part of the operating element, wherein, in the case of the measurement of the haptic contact, a compressive force by the driver on the first part of the operating element and/or an area of the haptic contact on the first part of the operating element are/is taken into account and/or account is taken of the point of the first part of the operating element at which there is haptic contact and/or account is taken of whether the first part of the operating element is grasped by one or two hands of the driver.

13. Electronic control unit which is designed to operate a device according to any of the preceding Claims 1-11, wherein the electronic control unit is designed to change the degree of the coupling between at least one first part of the operating element and the wheel-angle actuator of the vehicle and/or between at least one first part of the operating element and a fixed position in the coordinate system of the vehicle according to the measurement of the haptic contact of the driver of the vehicle with the above-mentioned first part of the operating element, wherein, in the case of the measurement of the haptic contact, a compressive force by the driver on the first part of the operating element and/or an area of the haptic contact on the first part of the operating element are/is taken into account and/or account is taken of the point of the first part of the operating element at which there is haptic contact and/or account is taken of whether the first part of the operating element is grasped by one or two hands of the driver.

## Revendications

1. Dispositif permettant de commander un véhicule à conduite au moins partiellement automatisée, comprenant un élément d'actionnement pouvant être actionné par un conducteur pour commander au moins le guidage transversal du véhicule, et un dispositif de réglage d'angle de roue qui commande un angle de braquage au niveau des roues directrices du véhicule en étant piloté par l'élément d'actionnement du conducteur et/ou par une unité de commande électronique commandant le guidage transversal automatisé du véhicule,
**caractérisé en ce que** le degré de l'accouplement entre au moins une première partie de l'élément d'actionnement et le dispositif de réglage d'angle de roue du véhicule et/ou entre au moins une première partie de l'élément d'actionnement et une position fixe dans le système de coordonnées du véhicule est variable en fonction de l'ampleur du contact haptique du conducteur du véhicule avec ladite première partie de l'élément d'actionnement, pour l'ampleur du contact haptique, dans lequel une force de pression du conducteur sur la première partie de l'élément d'actionnement et/ou une surface du contact haptique sur la première partie de l'élément d'actionnement est/sont prise(s) en compte, et/ou il est pris en compte à quel endroit de la première partie de l'élément d'actionnement existe le contact haptique, et/ou il est pris en compte si la première partie de l'élément d'actionnement est saisie d'une seule ou des deux mains du conducteur.

2. Dispositif selon la revendication 1, dans lequel une unité de commande électronique ouvre l'accouplement au moins partiellement et diminue ainsi le degré de l'accouplement si l'ampleur dudit contact haptique diminue.

3. Dispositif selon la revendication 1 ou 2, dans lequel une unité de commande électronique ferme l'accouplement au moins partiellement et augmente ainsi le degré de l'accouplement si l'ampleur dudit contact haptique augmente.

4. Dispositif selon l'une quelconque des revendications précédentes, dans lequel le degré de l'accouplement entre au moins une partie de l'élément d'actionnement et le dispositif de réglage d'angle de roue est variable en au moins deux étapes ou de manière continue ou quasi continue en fonction de l'ampleur du contact haptique.

5. Dispositif selon l'une quelconque des revendications précédentes, dans lequel l'ampleur du contact haptique entre le conducteur et l'élément d'actionnement comprend un schéma du contact haptique sur la base de la pression qui est appliquée par au moins une main du conducteur sur l'élément d'actionnement.

6. Dispositif selon l'une quelconque des revendications précédentes, dans lequel l'ampleur du contact haptique entre le conducteur et l'élément d'actionnement comprend un motif du contact haptique sur la base d'un motif de surface composé de valeurs de mesure détectées de manière capacitive.

7. Dispositif selon l'une quelconque des revendications précédentes, dans lequel le degré de l'accouplement d'au moins une deuxième partie de l'élément d'actionnement avec une position fixe dans le système de coordonnées du véhicule est commandé ou peut être défini, et la deuxième partie est différente de la première partie.

8. Dispositif selon l'une quelconque des revendications précédentes, dans lequel une variation du degré de l'accouplement de l'élément d'actionnement ou d'une partie de celui-ci dépend d'une action du conducteur dépassant une ampleur prédéterminée sur une autre unité d'actionnement servant à conduire le véhicule.

9. Dispositif selon l'une quelconque des revendications précédentes et configuré pour reconnaître une intention de prise en charge et/ou une capacité de direction du conducteur concernant une tâche de conduite et pour commander le degré de l'accouplement d'au moins une partie de l'élément d'actionnement en fonction de l'ampleur reconnue de l'intention de prise en charge et/ou de la capacité de prise en charge.

10. Dispositif selon l'une quelconque des revendications précédentes et configuré pour déterminer une manœuvre automatique actuellement exécutée ou une manœuvre probable effectuée au moins partiellement, et pour appliquer ensuite différentes ampleurs du contact haptique comme une condition à une variation du degré d'accouplement.

11. Dispositif selon l'une quelconque des revendications précédentes et configuré pour sortir au moins un signal haptique sur au moins une partie de l'élément d'actionnement en relation avec une variation du degré de l'accouplement, et/ou pour faire varier, en particulier définir, au moins une propriété haptique d'au moins une partie de l'élément d'actionnement en relation avec le degré actuel de l'accouplement.

12. Procédé de fonctionnement destiné à un dispositif qui est réalisé selon l'une quelconque des revendications précédentes, dans lequel le degré de l'accouplement entre au moins une première partie de l'élément d'actionnement et le dispositif de réglage d'angle de roue du véhicule et/ou entre au moins une première partie de l'élément d'actionnement et une position fixe dans le système de coordonnées du véhicule est varié en fonction de l'ampleur du contact haptique du conducteur du véhicule avec ladite première partie de l'élément d'actionnement, dans lequel pour l'ampleur du contact haptique, une force de pression du conducteur sur la première partie de l'élément d'actionnement et/ou une surface du contact haptique sur la première partie de l'élément d'actionnement est/sont prise(s) en compte, et/ou il est pris en compte à quel endroit de la première partie de l'élément d'actionnement existe le contact haptique, et/ou il est pris en compte si la première partie de l'élément d'actionnement est saisie d'une seule ou des deux mains du conducteur.

13. Unité de commande électronique qui est réalisée pour faire fonctionner un dispositif selon l'une quelconque des revendications précédentes 1 à 11, l'unité de commande électronique étant conçue pour varier le degré de l'accouplement entre au moins une première partie de l'élément d'actionnement et le dispositif de réglage d'angle de roue du véhicule et/ou entre au moins une première partie de l'élément d'actionnement et une position fixe dans le système de coordonnées du véhicule en fonction de l'ampleur du contact haptique du conducteur du véhicule avec ladite première partie de l'élément d'actionnement, dans laquelle, pour l'ampleur du contact haptique, une force de pression du conducteur sur la première partie de l'élément d'actionnement et/ou une surface du contact haptique sur la première partie de l'élément d'actionnement est/sont prise(s) en compte, et/ou il est pris en compte à quel endroit de la première partie de l'élément d'actionnement existe le contact haptique, et/ou il est pris en compte si la première partie de l'élément d'actionnement est saisie d'une seule ou des deux mains du conducteur.
